# EUROPÄISCHE PATENTSCHRIFT

(11) **EP 2 855 975 B1**
(45) Veröffentlichungstag und Bekanntmachung des Hinweises auf die Patenterteilung: **01.05.2019**
(21) Anmeldenummer: 13722775.7
(22) Anmeldetag: 17.05.2013
(51) Int. Cl.: F16H 13/06, F16H 13/14, B60K 1/00, B60L 15/20

(54) **REIBROLLENPLANETENGETRIEBE SOWIE ÜBERSETZUNGS- UND AUSGLEICHSGETRIEBE**
FRICTION ROLLER PLANETARY GEARING AND SPEED-CHANGING AND DIFFERENTIAL GEARING
ENGRENAGE PLANÉTAIRE À GALETS DE FRICTION AINSI QU'ENGRENAGE DÉMULTIPLICATEUR ET DIFFÉRENTIEL

(30) Priorität: 24.05.2012 DE 102012010316
(43) Veröffentlichungstag der Anmeldung: 08.04.2015
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE); LUTZ, Andreas, 38104 Braunschweig (DE); HANKE, Stefan, 38126 Braunschweig (DE)
(86) Internationale Anmeldenummer: PCT/EP2013/060228
(87) Internationale Veröffentlichungsnummer: WO 2013/174740

(56) Entgegenhaltungen:
- JP-A- 2010 025 237
- JP-A- 2010 276 131
- JP-A- 2011 012 722

## Beschreibung

### Gebiet der Erfindung

Die Erfindung bezieht sich auf ein Reibrollenplanetengetriebe, umfassend
- ein Gehäuse,
- eine Sonnenwelle mit einer ersten und einer zweiten darauf angeordneten Sonne, die jeweils als Reibrollen ausgebildet und axial zueinander verschieblich sind und von denen wenigstens eine drehfest mit der Sonnenwelle verbunden ist,
- einen Planetenträger, an dem eine Mehrzahl als Reibrollen ausgebildeter, gestufter Planeten, welche je ein Paar Kontaktflächen kleineren Durchmessers und ein Paar Kontaktflächen größeren Durchmessers aufweisen, drehbar gelagert sind, und
- ein drehfest mit dem Gehäuse verbundenes, als Reibring ausgebildetes, erstes Hohlrad,
wobei die Planeten jeweils mit dem einen Paar ihrer Kontaktflächen an den Sonnen abwälzen und mit wenigstens einer Kontaktfläche des anderen Paares ihrer Kontaktflächen an dem Hohlrad abwälzen und
wobei der Kontaktdruck zwischen den Sonnen und den zugeordneten Kontaktflächen der Planeten durch eine erste momentenabhängige Axialverschiebeeinrichtung mittels momentenabhängiger Axialverschiebung wenigstens einer der Sonnen steuerbar ist.

Die Erfindung bezieht sich weiter auf ein Übersetzungs- und Ausgleichsgetriebe, umfassend eine Eingangsstufe, eine Laststufe sowie eine Differentialstufe, die jeweils als Planetenstufen ausgebildet und koaxial zueinander angeordnet sind, insbesondere auf ein Übersetzungs- und Ausgleichsgetriebe für ein elektrisch angetriebenes Kraftfahrzeug mit einem Gehäuse, einer Getriebeeingangswelle und zwei koaxial zu der Getriebeeingangswelle angeordneten Getriebeausgangswellen, umfassend
- eine als Planetensatz ausgebildete Eingangsstufe, deren als Eingangsstufeneingangswelle wirkende Sonnenwelle als die Getriebeeingangswelle koaxial mit einer Antriebsausgangswelle einer elektrischen Maschine verbindbar ist und deren Planetenträgerwelle als Eingangsstufenausgangswelle wirkt,
- eine als Planetensatz ausgebildete Laststufe deren Sonnenwelle als Laststufeneingangswelle koaxial mit der Eingangsstufenausgangswelle verbunden ist, deren Hohlrad gehäusefest fixiert ist und deren Planetenträgerwelle als Laststufenausgangswelle wirkt,
- eine als Doppelplanetensatz ausgebildete Differentialstufe mit einer Differentialeingangswelle und zwei Differentialausgangswellen, die als die Getriebeausgangswellen mit Antriebsrädern des Kraftfahrzeugs verbindbar sind.

### Stand der Technik

Gattungsgemäße Reibrollengetriebe sind bekannt aus der US 3,475,993, JP2011-12722A, JP2010-276131A und JP2010-25237A. Gattungsgemäße Übersetzungs- und Ausgleichsgetriebe sind in der US 6,401,850.Getriebeanordnungen in Koaxialbauweise und insbesondere koaxiale Motor-/Getriebeeinheiten haben sich für elektrisch angetriebene Kraftfahrzeuge aufgrund ihrer Bauraum-, Kraftübertragungs- und Wirkungsgradvorteile bewährt.

Weiteres Verbesserungspotenzial bietet die elektrische Antriebseinheit, d.h. die elektrische Maschine an sich. Hier wäre es günstig, die für sehr effiziente und leistungsdichte Antriebe im Werkzeugmaschinenbau eingesetzten elektrischen Maschinen verwenden zu können. Diese zeichnen sich unter anderem durch sehr hohe Nenndrehzahlen, beispielsweise höher als 30.000 U/min aus. Es ist offensichtlich, dass beim Einsatz solcher Hoch- und Höchstdrehzahlmaschinen in elektrisch angetriebenen Kraftfahrzeugen hochübersetzende Getriebestrukturen, beispielsweise solche mit Übersetzungen i=25-40 erforderlich sind. Die bislang bekannten Getriebestrukturen in Koaxialbauweise haben hierfür deutlich zu geringe Übersetzungsbereiche. Eine bloße Anpassung von Zähnezahlen und/oder Getriebestufenanzahlen ist zur Lösung dieser Problematik nicht geeignet. Aufgrund der sehr hohen, insbesondere in der Eingangsstufe einer solchen Getriebeanordnung auftretenden Drehzahlen müssten die involvierten Zahnräder mit solcher Präzision gefertigt werden, dass die damit verbundenen Kosten zur Unwirtschaftlichkeit dieser Lösung führen würden. Zudem würden die hohen Drehzahlen zu einer erheblichen Geräuschbelastung führen, die modernen Komfortansprüchen an Kraftfahrzeuge nicht gerecht würde.

Der Einsatz bekannter Reibrollengetriebe anstelle von verzahnten Getrieben würde an dieser Stelle ebenfalls nicht weiterhelfen. Insbesondere wäre ein gattungsgemäßes Reibrollenplanetengetriebe für die auftretenden Drehzahlen und die aufgrund der hohen Übersetzung sehr großen Momentenunterschiede zwischen Eingangs- und Ausgangswelle für den genannten Einsatzzweck nicht geeignet. Das bekannte Traktionsgetriebe (im Rahmen der vorliegenden Anmeldung synonym zu Reibrollengetriebe) ist als ein Planetengetriebe mit doppelter Sonne, symmetrischen, gestuften Planeten und einem einzelnen, gehäusefesten Hohlrad ausgebildet. Als Getriebeeingangswelle dient die Sonnenwelle; als Getriebeausgangswelle wirkt die Planetenträgerwelle. Die auf der Sonnenwelle angeordneten Sonnen sind als kegelstumpfförmige, einander mit ihren kleineren Stirnseiten zugewandte Reibrollen ausgebildet. Eine erste Sonne ist mittels einer Verzahnung drehfest, aber axial verschieblich auf der Sonnenwelle gelagert. Die zweite Sonne ist lose auf der Sonnenwelle gelagert. Beide Sonnen stehen über ihre kegelstumpfmantelförmigen Kontaktflächen mit Paaren entsprechend geformter Kontaktflächen der als Reibrollen ausgebildeten Planeten in Kontakt. Jeder Planet weist eine beidseitig angeschrägte Umfangsnut auf, die Einzelflächen seines Kontaktflächenpaares voneinander trennt. Die Seitenwände dieser Nut stehen mit entsprechend geformten Flanken des als Reibring ausgebildeten, gehäusefesten Hohlrades in Kontakt. Bekanntermaßen wird bei solchen Getrieben ein Moment von der Eingangs- zur Ausgangswelle über die Traktion zwischen den verschiedenen Reibkörpern übertragen. Die geometrischen Übersetzungsverhältnisse berechnen sich analog zu verzahnten Getrieben über die Durchmesser der beteiligten Kontaktflächen, wobei als Durchmesser jeweils der senkrechte Abstand zwischen der Drehachse und dem tatsächlichen Kontaktpunkt auf der Reibkörperoberfläche anzusehen ist. So ist bei dem bekannten Traktionsgetriebe der Durchmesser der Planetenkontaktflächen zu den Sonnen größer als der Durchmesser der Planetenkontaktflächen zum Hohlrad, sodass die Planeten als Stufenplaneten wirken.

Der Wirkungsgrad der Momentenübertragung mittels Traktion hängt wesentlich vom Kontaktdruck der miteinander wechselwirkenden Kontaktflächen ab, wobei dessen Optimum sehr stark von der Kontaktflächengeometrie sowie den beteiligten Drehzahlen und Momenten abhängt.
Die bekannte Vorrichtung weist daher eine als Kugelrampen-Axialverschiebungsvorrichtung ausgebildete Momentenanpassung auf. So ist auf der Rückseite der losen Sonne ein Stützkörper fest mit der Sonnenwelle verbunden, der einen Satz Kugeln in Kugelrampen führt, wobei die Kugeln als Abstandskörper zwischen dem Stützkörper und der losen Sonne dienen. Je nach übertragendem Moment kommt es zu einer Relativverdrehung zwischen loser Sonne und Stützkörper, was mittels der Kugelrampenführung in eine Axialverschiebung der losen Sonne übersetzt wird. Hierdurch erhöht sich der Kontaktdruck zwischen den Sonnen und den Planeten, was jedoch auch mit einer Radialverschiebung der Planeten einhergeht, die ihrerseits zu einer Änderung des Kontaktdrucks zwischen Planeten und Hohlrad führt. Die Radialverschiebung der Planeten wird insbesondere dadurch ermöglicht, dass die Lagerbolzen, auf denen die Planeten gelagert sind, in Radialschlitzen des Planetenträgers gelagert sind.

Diese Ausgestaltung einer Traktionsstufe hat verschiedene Nachteile. Zum einen ist die radial verschiebliche Lagerung der Planetenlagerbolzen technisch aufwendig und daher teuer. Zum zweiten wirkt sich, wie beschrieben, eine momentenabhängige Änderung des Kontaktdrucks zwischen Sonnen und Planeten unmittelbar auch auf den Kontakt zwischen Planeten und Hohlrad aus. Dies ist insbesondere bei hohen Übersetzungen, bei denen sich die Drehzahl- und Momentenverhältnisse in den unterschiedlichen Kontaktbereichen stark unterscheiden, ungünstig, weil dadurch eine optimale Einstellung in beiden Kontaktbereichen unmöglich wird. Und schließlich muss insbesondere bei Hochdrehzahlanwendungen als nachteilig angesehen werden, dass auf die Planeten wirkenden Fliehkräfte aufgrund der radialverschieblichen Lagerung der Planetenlagerbolzen unmittelbar auch auf den Kontakt zwischen Planeten und Hohlrad (belastend) und zwischen Planeten und Sonnen (entlastend) wirken.

### Aufgabenstellung

Es ist die Aufgabe der vorliegenden Erfindung, eine für hochübersetzende, im Hochdrehzahlbereich arbeitende Koaxialgetriebe geeignete Eingangsstufe zur Verfügung zu stellen.

### Darlegung der Erfindung

Diese Aufgabe wird in Verbindung mit den Merkmalen des Oberbegriffs von Anspruch 1 dadurch gelöst, dass ein als Reibring ausgebildetes, zweites Hohlrad vorgesehen ist, das relativ zu dem ersten Hohlrad axial verschieblich angeordnet ist, sodass die Planeten mit ihrem zugeordneten Paar von Kontaktflächen an beiden Hohlrädern abwälzen,
wobei der Kontaktdruck zwischen den Hohlrädern und den zugeordneten Kontaktflächen der Planeten durch eine zweite momentenabhängige Axialverschiebeeinrichtung mittels momentenabhängiger Axialverschiebung wenigstens eines der Hohlräder steuerbar ist.

Damit lassen sich gattungsgemäße Übersetzungs- und Ausgleichsgetriebe mit den Merkmalen des Oberbegriffs von Anspruch 14 derart weiterbilden, dass
- die Planeten der als ein solches Reibrollenplanetengetriebe ausgebildeten Eingangsstufe als Stufenplaneten ausgebildet sind, wobei eine Sonne an einer ersten Planetenstufe größeren Durchmessers und ein gehäusefest fixiertes Hohlrad an einer zweiten Planetenstufe kleineren Durchmessers abwälzt und
- die Planetenträgerwelle der Differentialstufe als Differentialstufeneingangswelle und die Sonnenwellen der Differentialstufe als Differentialstufenausgangswellen wirken.

Bevorzugte Ausführungsformen der Erfindung sind Gegenstand der abhängigen Ansprüche.

Grundgedanke der Erfindung ist es, neben dem Sonnen-Planeten-Kontakt auch den Planeten-Hohlrad-Kontakt mit einer momentenabhängigen Kontaktdrucksteuerung zu versehen. Dies erlaubt es, wie bei einer bevorzugten Ausführungsform vorgesehen, die Lagerbolzen, auf denen die Planeten am Planetenträger gelagert sind, radial fest mit dem Planetenträger zu verbinden. Radial wirkende Kraftanteile der Kontaktkräfte einerseits und der Fliehkräfte andererseits können somit von den Lagerbolzen abgestützt werden, sodass eine unabhängige und auf die lokalen Drehzahl- und Momentenverhältnisse abgestimmte Steuerung des Kontaktdrucks erfolgen kann. Die spezielle Auslegung dieser Abstimmung ist dem Fachmann in Ansehung des Einzelfalls überlassen, wobei er sich hierzu insbesondere der geometrischen Ausgestaltung der jeweiligen Axialverschiebevorrichtung bedienen kann. Mit anderen Worten wird des durch die Erfindung möglich, die Traktionsverhältnisse zwischen Sonnen und Planeten einerseits und zwischen Planeten und Hohlrädern andererseits unabhängig voneinander jeweils zu optimieren, sodass insgesamt der Wirkungsgrad des erfindungsgemäßen Traktionsgetriebes optimiert wird.

Günstigerweise ist vorgesehen, dass die den Hohlrädern zugeordneten Kontaktflächen der symmetrisch ausgebildeten Planeten einen kleineren Durchmesser als die den Sonnen zugeordneten Kontaktflächen der Planeten aufweisen und dass die den Sonnen zugeordneten Kontaktflächen axial zwischen den den Hohlrädern zugeordneten Kontaktflächen angeordnet sind. Dies beschreibt eine besonders vorteilhafte Formgebung der Planetenrollen. Sie können als rotationssymetrische Körper beschrieben werden, die in ihrem achsnahen Bereich eine größere Breite aufweisen als in ihrem achsfernen Bereich, wobei der achsnahe und der achsferne Bereich bevorzugt durch eine im Querschnitt stegartige Verbindung miteinander verbunden sind. Durch diese Formgebung wird das Gesamtgewicht und insbesondere das Trägheitsmoment gegenüber Formgebungen gem. dem gattungsbildenden Stand der Technik reduziert. Zugleich kann die resultierende Stufung eines solchen Stufenplaneten deutlicher ausfallen, was die Realisierungen größerer Übersetzungen ermöglicht.

Wie der Fachmann erkennt, sind bei einem erfindungsgemäßen Traktionsgetriebe etliche axial verschiebliche Elemente beteiligt. Gleichwohl bedarf es an wenigstens einer Stelle einer festen Referenz, über die das erfindungsgemäße Getriebe mit anderen Elementen, beispielsweise weiteren Getriebestufen und/oder einem Antrieb, in räumliche und kraftübertragende Beziehung gesetzt werden kann. Als besonders günstig hat es sich herausgestellt, wenn das erste Hohlrad fest und das zweite Hohlrad drehfest mit dem Gehäuse verbunden ist. Mit anderen Worten bildet das erste Hohlrad die vorgenannte, feste Referenz. Die nachfolgend beschriebenen, vorteilhaften Ausführungsformen sind in besonders günstiger Weise im Zusammenhang mit einer solchen räumlichen Referenzierung einsetzbar. Denkbar sind jedoch auch andere Ausgestaltungen, bei denen beispielsweise eine Sonne oder die Sonnenwelle als feste Referenz dient. Für den Fachmann wird es ein leichtes sein, die betroffenen Details der nachfolgend beschriebenen Ausführungsformen im Lichte der hier offenbarten Lehre entsprechend anzupassen.

Bevorzugt ist vorgesehen, dass die den Sonnen zugeordnete Axialverschiebeeinrichtung einen zur Sonnenwelle drehfesten, auf der der ersten Sonne abgewandten Seite der zweiten Sonne axial an der Sonnenwelle abgestützten Rampenträger und zwischen dem Rampenträger und der zweiten Sonne einen Satz diese beiden kontaktierender Abstandskörper aufweist, wobei die Abstandskörper in Rampenführungen des Rampenträgers und/oder der zweiten Sonne geführt sind. Die zweite Sonne ist dabei lose auf der Sonnenwelle gelagert. Je nach anliegendem Moment kommt es somit zu einer Relativverdrehung zwischen der zweiten Sonne und dem Rampenträger, die über die Abstandskörper und die Rampenführungen in eine momentenabhängigen Axialverschiebung der zweiten Sonne übersetzt werden. Die konkrete Form dieser Abhängigkeit ergibt sich aus der speziellen Form der Rampenführungen. So lassen sich beispielsweise lineare aber auch deutlich kompliziertere Drehmomentabhängigkeiten realisieren.

Als Rampenträger könnte beispielsweise ein fest mit der Sonnenwelle verbundenes Element dienen. Dies ist jedoch im Hinblick auf die Fertigung und Montage ungünstig. Es ist daher bei einer bevorzugten Ausführungsform vorgesehen, dass der Rampenträger einen mit der Sonnenwelle axial fest verbundenen Stützring und sonnenseitig von diesem eine gegen ihn abgestützte, drehfest mit der Sonnenwelle verbundene Rampenträgerhülse aufweist. Dies lässt eine einfache Montage durch Aufstecken der Elemente auf die Sonnenwelle zu. Der Stützring kann beispielsweise als einfacher Sprengring in einer Nut der Sonnenwelle ausgebildet sein.

Analog zur Ausgestaltung der Axialverschiebeeinrichtung der Sonnen ist bei einer bevorzugten Ausführungsform der Erfindung vorgesehen, dass die den Hohlrädern zugeordnete Axialverschiebeeinrichtung einen auf der dem ersten Hohlrad abgewandten Seite des zweiten Hohlrades fest mit dem Gehäuse verbundenen Rampenträger und zwischen dem Rampenträger und dem zweiten Hohlrad einen Satz diese beiden kontaktierender Abstandskörper aufweist, die in Rampenführungen des Rampenträgers und/oder des zweiten Hohlrades geführt sind. Zur Funktionsweise dieser Axialverschiebeeinrichtung kann analog auf das oben zur Axialverschiebeeinrichtung der Sonnen gesagte verwiesen werden. Die Ausgestaltung ist jedoch geringfügig einfacher, da mit dem ersten Hohlrad bereits eine feste Referenz gegeben ist. Der Kräftekurzschluss, der bei der sonnenseitigen Axialverschiebevorrichtung von der ersten Sonne über die Sonnenwelle zum Rampenträger erfolgt, erfolgt bei der hohlradseitigen Axialvorrichtung vom ersten Hohlrad über das Gehäuse zum Rampenträger. Bei den oben bereits erwähnten Modifikationen der Erfindung, bei denen nicht das erste Hohlrad, sondern beispielsweise die Sonnenwelle als räumliche Referenz dient, wird der Fachmann entsprechende Anpassungen vorzunehmen haben.

Bevorzugt ist vorgesehen, dass die Rampenführungen wenigstens einer Axialverschiebeeinrichtung als wellenförmige Stirnnocken ausgebildet sind. Der Rampenträger, insbesondere die Rampenträgerhülse weisen bei dieser Ausführungsform an ihrer dem jeweils auszurückenden Element zugewandten Stirnseite wellenartige Nocken auf, die als Anlage der Abstandskörper dienen. Alternativ oder zusätzlich können die jeweils auszurückenden Elemente, d.h. die zweite Sonne und/oder das zweite Hohlrad, an ihrer dem jeweils zugeordneten Rampenträger zugewandten Stirnseite solch wellenförmige Stirnnocken aufweisen. Der Fachmann wird erkennen, dass die Funktionsweise derjenigen bekannter Kugelrampenführungen entspricht und dass solche Kugelrampenführungen tatsächlich eine mögliche Ausgestaltungsform sind. Bevorzugt wird jedoch, dass die Abstandskörper wenigstens einer Axialverschiebeeinrichtung als radial orientierte Zylinderkörper ausgebildet sind. Diese Ausgestaltung hat zwei Vorteile. Zum einen ist die Gestaltung der Stirnnocken, die nicht zwingend Führungsnuten für die Abstandskörper aufweisen müssen, deutlich einfacher als bei Kugelrampenführungen, die zwingend Nuten mit halbrundem Nutgrund erfordern. Zum anderen wird durch die zylinderförmige Ausgestaltung der Abstandskörper (und die entsprechende Stirnnockengestaltung) auch verhindert, dass die Axialverschiebevorrichtung Radialkräfte aufnimmt, was bei einer typischen Kugelrampenführung über die Seitenwände der Führungsnuten stets der Fall ist.

Um momentenunabhängig über eine Basistraktion zu verfügen, ist bevorzugt vorgesehen, dass die Rampenführungen in Richtung auf die Abstandskörper axial vorgespannt sind. Beispielsweise können die Stirnnocken der Rampenträger als Tellerfedern ausgestaltet oder mit Tellerfedern hinterlegt sein.

Wie der Fachmann erkennen wird, ist eine axiale Verschieblichkeit der Planeten im Rahmen der vorliegenden Erfindung unverzichtbar. Dabei ist es unerheblich, ob diese Verschieblichkeit aus einer Verschieblichkeit der Planeten auf ihren Lagerbolzen oder eine Axialverschieblichkeit der Lagerbolzen selbst resultiert. Zusammen mit der Unabhängigkeit der beiden Kontaktdrucksteuerungen voneinander bedeutet dies, dass eine Druckanpassung des Kontaktdrucks zwischen Hohlrädern und Planeten zu einer Axialverschiebung der Planeten führt, die keine Entsprechung bei der Kontaktdrucksteuerung zwischen Sonnen und Planeten hat. Um hier einen Ausgleich zu schaffen, ist bevorzugt vorgesehen, dass die Sonnenwelle und mit ihr die erste Sonne axial verschieblich gelagert ist. Alternativ könnte auch eine Axialverschieblichkeit der ersten Sonne auf der Sonnenwelle vorgesehen sein, was jedoch konstruktiv komplizierter ist. Auch hier wird der Fachmann erkennen, dass bei einer anderen Realisierung der räumlichen Referenz als durch das gehäusefeste erste Hohlrad entsprechende Anpassungen vorzunehmen sind.

Das bevorzugte Einsatzgebiet des erfindungsgemäßen Traktionsgetriebes ist als Eingangsstufe eines Übersetzungs- und Ausgleichsgetriebes, umfassend eine Eingangsstufe, eine Laststufe sowie eine Differentialstufe, die jeweils als Planetenstufen ausgebildet und koaxial zueinander angeordnet sind. Ein solches Übersetzungs- und Ausgleichsgetriebe lässt sich in besonders kompakter Weise gestalten, wenn vorgesehen wird, dass als Ausgangswelle der Laststufe und als Eingangswelle der Differentialstufe jeweils deren Planetenträgerwellen dienen, wobei Planeten der Laststufe und Planeten der Differentialstufe gemeinsam auf durchgehenden, diesen beiden Getriebestufen gemeinsamen Lagerbolzen gelagert sind.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine schematische Darstellung eines Antriebsstrangs eines Kraftfahrzeugs,
- Figur 2:: eine geschnittene Darstellung eines erfindungsgemäßen Traktionsgetriebes,
- Figur 3:: eine perspektivische Darstellung des Traktionsgetriebes von Figur 2,
- Figur 4:: eine geschnittene, perspektivische Darstellung des Traktionsgetriebes von Figur 2.

### Ausführliche Beschreibung bevorzugter Ausführungsformen

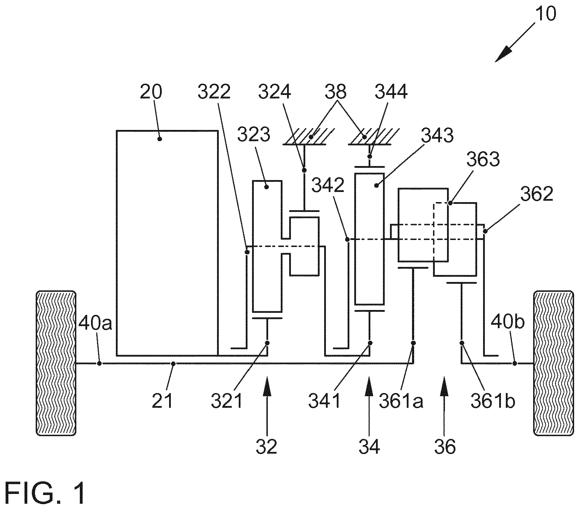

Figur 1 zeigt in schematischer Darstellung den Antriebsstrang 10 eines elektrisch angetriebenen Kraftfahrzeugs, der für den Einsatz eines erfindungsgemäßen Traktionsgetriebes besonders geeignet ist. Ein mittels einer elektrischen Maschine 20 erzeugtes Moment wird über ein Übersetzungs- und Ausgleichsgetriebe 30 auf die Schenkel 40a,b einer angetriebenen Fahrzeugachse übertragen. Die elektrische Maschine 20, das Übersetzungs- und Ausgleichsgetriebe 30 sowie die Achsschenkel 40a,b sind koaxial zueinander angeordnet. Das Übersetzungs- und Ausgleichsgetriebe 30 umfasst eine Eingangsstufe 32, eine Laststufe 34 und eine Differentialstufe 36. Als Eingangswelle der Eingangsstufe dient deren Sonnenwelle 321, die mit der Ausgangswelle 21 der elektrischen Maschine verbunden ist. Der Planetenträger 322 trägt einen Satz Stufenplaneten 323, deren größere Stufe mit der Sonnenwelle 321 und deren kleinere Stufe mit einem Hohlrad 324 wirkverbunden ist. Das Hohlrad 324 ist drehfest mit einem nicht näher dargestellten Getriebegehäuse 38 verbunden. Als Ausgangswelle der Eingangsstufe 32 dient die Welle des Planetenträgers 322. Diese ist mit der Sonnenwelle 341 der Laststufe 34 verbunden. Deren Planetenträger 342 trägt einen Satz einfacher Planeten 343, die mit der Sonnenwelle 341 einerseits und mit einem gehäusefesten Hohlrad 344 andererseits zusammenwirken. Als Ausgangswelle der Laststufe dient die Welle des Planetenträgers 342. Diese ist mit dem Planetenträger 362 der Differentialstufe 36 verbunden. Der Planetenträger 362 der Differentialstufe 36 trägt einen doppelten Planetensatz 363, deren Einzelplaneten paarweise miteinander und mit je einer von zwei Sonnenwellen 361a,b zusammenwirken. Die Sonnenwellen 361a, 361b dienen als Ausgangswellen der Differentialstufe 36 und zugleich als Getriebeausgangswelle des Übersetzungs- und Ausgleichsgetriebes 30. Insbesondere ist die Sonnenwelle 361a mit dem Achsschenkel 40a und die Sonnenwelle 361b mit dem Achsschenkel 40b verbunden.

Man erkennt, dass die Laststufe 34 und die Differentialstufe 36 über die Wellen ihrer jeweiligen Planetenträger 342, 362 miteinander verbunden sind. Um eine besonders kompakte Bauweise zu realisieren, können die Planeten 343 der Laststufe 34 und jeweils zugeordnete Planeten des Doppelplanetensatzes 363 der Differentialstufe 36 auf durchgehenden, gemeinsamen Lagerbolzen gelagert sein.

Die vorliegende Erfindung betrifft hauptsächlich die bevorzugte Ausgestaltung der Eingangsstufe 32 als ein Traktions- oder Reibrollengetriebe, wobei ein derartiges Getriebe in vorteilhafter Weise auch isoliert oder in anderer Kombination als in Figur 1 gezeigt, einsetzbar ist.

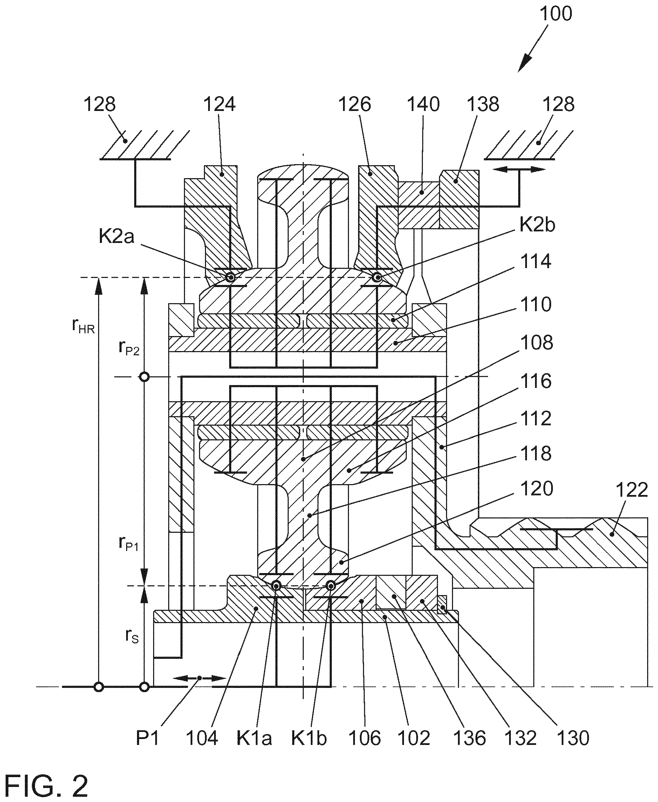

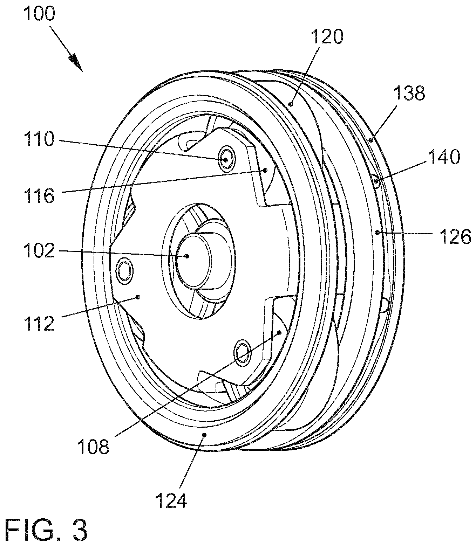

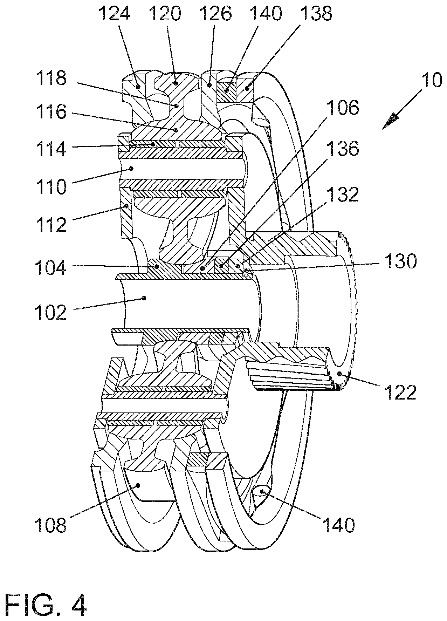

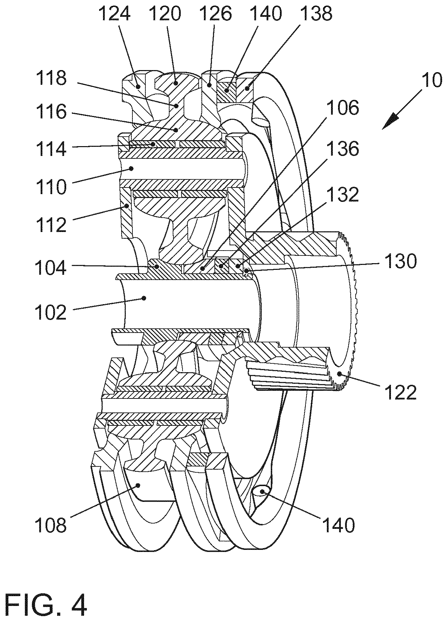

Die Figuren 2 bis 4 zeigen in unterschiedlicher Darstellung eine besonders vorteilhafte Ausführungsform eines solchen Traktionsgetriebes, wobei, u.a. um die Unabhängigkeit des Traktionsgetriebes 100 von der Struktur von Figur 1 zu unterstreichen, von Figur 1 unabhängige Bezugszeichen verwendet werden. Die Figuren 2 bis 4, die ein einheitliches Bezugszeichensystem aufweisen, sollen nachfolgend gemeinsam diskutiert werden.

Das Traktionsgetriebe 100 ist als Planetensatz ausgebildet. Seine Sonnenwelle 102, die, wie durch den Doppelpfeil P1 angedeutet, in beschränktem Maße axial verschieblich ist, trägt eine fest, im vorliegenden Fall insbesondere einstückig mit ihr verbundene Sonne 104. Diese Sonne, die in den Ansprüchen als erste Sonne angesprochen wird, soll im Rahmen dieser speziellen Beschreibung der leichteren Verständlichkeit halber als Festsonne 104 bezeichnet werden. Benachbart zu der Festsonne 104 ist eine weitere Sonne 106 lose auf der Sonnenwelle 102 gelagert. Diese Sonne, die in den Ansprüchen als zweite Sonne 106 angesprochen wird, soll im Rahmen dieser speziellen Beschreibung der leichteren Verständlichkeit halber als Lossonne 106 bezeichnet werden. Die beiden Sonnen 104, 106 tragen nach innen, d.h. aufeinander zu abfallende, konkav gekrümmte Kontaktflächen auf. Diese stehen in Kontakt mit korrespondierend konvex geformten Kontaktflächen von Stufenplaneten 108, von denen in Figur 2 lediglich einer dargestellt ist. Die konkreten Kontaktpunkte zwischen den sonnen- und planetenseitigen Kontaktflächen sind in Figur 2 schematisch dargestellt und als K1a und K1b gekennzeichnet. Die senkrechten Abstände der Kontaktpunkte K1a, K1b zur jeweiligen Drehachse stellen die Kontaktradien dar und sind in Figur 2 als r_{S} bzw. r_{P1} bezeichnet. Diese Sonnen- und erste Plantenradien sind gemeinsam mit den nachfolgend beschriebenen Hohlrad- und zweiten Planetenradien für die nominelle Übersetzung des Traktionsgetriebes 100 verantwortlich.

Die Planeten 108 sind auf Lagerbolzen an einem Planetenträger 112, der mit einer koaxial zur Sonnenwelle 102 angeordneten Planetenträgerwelle 122 verbunden ist, gelagert. Bei der dargestellten Ausführungsform erfolgt die Lagerung über Nadellager 114, die neben einer Rotation der Planeten 108 auch deren axiale Verschiebung zulassen, wobei die Lagerbolzen 110 fest mit dem Planetenträger 112 verbunden sind. Die Planeten 108 sind rotationssymmetrisch und im Querschnitt doppelt spiegelsymmetrisch aufgebaut. Sie haben einen breiten Planetenkörper 116, von dem sich ein zentraler, schmaler Planetenhals 118 erstreckt, welcher auf einem sich wieder verbreiterndem Planetenkopf 120 die bereits oben beschriebenen Kontaktflächen zur Kontaktierung der Sonnen 102, 104 trägt. Die Schultern des Planetenkörpers 116 bilden ein weiteres Paar von Kontaktflächen. Diese sind konvex geformt und wälzen an korrespondierend konkav geformten Kontaktflächen zweier Hohlräder 124, 126 ab. Das mit dem Bezugszeichen 124 versehene Hohlrad, das in den Ansprüchen als erstes Hohlrad 124 angesprochen wird, ist bei der dargestellten Ausführungsform fest mit dem nicht näher dargestellten Gehäuse 128 verbunden und soll im Rahmen dieser speziellen Beschreibung der leichteren Verständlichkeit halber als Festhohlrad 124 bezeichnet werden. Das Hohlrad 126, das in den Ansprüchen als zweites Hohlrad 126 angesprochen wird, soll im Rahmen dieser speziellen Beschreibung der leichteren Verständlichkeit halber als Loshohlrad 126 bezeichnet werden. Es ist, wie der Doppelpfeil P2 symbolisiert, drehfest, jedoch axial verschieblich mit dem Gehäuse 128 verbunden.
Die konkreten Kontaktpunkte zwischen den Hohlrädern 124, 126 und den Schultern der Planeten 108 sind in Figur 2 schematisch dargestellt und mit K2a bzw. K2b bezeichnet. Ihre Abstände von der Dreh- bzw. Symmetrieachse des entsprechenden Elementes stellen die Kontaktradien dar, die in Figur 2 mit r_{RH} und r_{P2} gekennzeichnet sind.

Im Einzelnen bezeichnen r_{S} den Sonnenradius, r_{RH} den Hohlradradius, r_{P1} einen ersten Planetenradius und r_{P2} einen zweiten Planetenradius, wobei die beiden Planetenradien unterschiedlich sind, sodass funktional ein Stufenplanet realisiert ist. Dabei wechselwirken die Sonnen 104, 106 mit der größeren Planetenstufe und die Hohlräder 124, 126 mit der kleineren Planetenstufe. Zur Steuerung, insbesondere zur momentenabhängigen Steuerung des Kontaktdrucks, der an den Kontaktpunkten K1a, K1b bzw. K2a, K2b zwischen den jeweiligen Kontaktflächen wirkt, sind spezielle Axialverschiebevorrichtungen vorgesehen. Im Innenbereich das Traktionsgetriebes 100 ist die Lossonne 106 relativ zur Festsonne 104 axial verschiebbar. Hierzu ist in einer Nut der Sonnenwelle 102 ein Sprengring 130 angeordnet, der eine Rampenträgerhülse 132 axial abstützt. Die Rampenträgerhülse 132 ist ihrerseits drehfest mit der Sonnenwelle 102 verbunden. Durch den Kontakt der Lossonne 106 mit dem Planetenkopf 120 wirkt eine nach axial außen gerichtete Kraft auf die Lossonne 106, die sich über radial ausgerichtete, zylindrische Abstandskörper 134 gegen die Rampenträgerhülse 132 abstützt. Die der Lossonne 106 zugewandte Stirnseite der Rampenträgerhülse ist in Umfangsrichtung wellenförmig gestaltet, sodass eine Stirnnockenstruktur realisiert ist. Bei einer Relativverdrehung von Lossonne 106 zur Rampenträgerhülse 132, die bei Unangepasstheit des aktuell herrschenden Kontaktdrucks an das aktuell anliegende Moment auftritt, kommt es somit zu einer Axialverschiebung der Lossonne 106 und somit zu einer Änderung des Kontaktdrucks, insbesondere zu seiner Anpassung an das anliegende Moment. Aufgrund der Axialverschieblichkeit der Planeten 108 verändert sich im gleichen Maße auch der Kontaktdruck zwischen dem Planetenkopf 120 und der Festsonne 104. Die traktionsvermittelte Momentenübertragung zwischen Sonnen und Planeten bleibt daher symmetrisch.

Analog hierzu arbeitet die äußere Axialverschiebevorrichtung, die den Kontaktdruck zwischen den Hohlrädern 124, 126 und den Schultern des Planetenkörpers 116 steuert. Hier ist ein Rampenträger 138 fest mit dem Gehäuse 128 verbunden. Er steht über radial ausgerichtete, zylindrische Abstandskörper 140 mit der äußeren Stirnfläche des Losholrades 126 in Kontakt. Die dem Loshohlrad 126 zugewandte Stirnfläche des Rampenträgers 138 ist in Umfangsrichtung wellenförmig gestaltet, sodass auch hier Stirnnocken realisiert sind. Bei einer Relativverdrehung von Loshohlrad 126 zu Rampenträger 138, die bei Unangepasstheit des Kontaktdrucks zwischen den Hohlrädern 124, 126 und den Schultern des Planetenkörpers 116 auftritt, kommt es somit zu einer Axialverschiebung des Loshohlrades 126. Hierdurch verändert sich der Kontaktdruck. Aufgrund der Axialverschieblichkeit der Planeten 108 bleibt die traktionsvermittelte Momentenübertragung zwischen Hohlrädern 124, 126 und den Schultern des Planetenkörpers 116 symmetrisch.

Der Fachmann wird erkennen, dass die Kontaktdruckeinstellungen durch die beiden Axialverschiebevorrichtungen völlig unabhängig voneinander sind. Gleichwohl besteht durch die Axialverschiebung der Planeten eine gewisse Wechselwirkung. Diese kann durch die Axialverschieblichkeit der Sonnenwelle 102 kompensiert werden. Änderungen radialer Kraftkomponenten werden hingegen von den radial fest im Planetenträger angeordneten Lagerbolzen 110 abgestützt. Diese stützen auch fliehkraftbedingte radiale Kraftkomponenten ab.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere wird der Fachmann die konkrete Form der Rampen bzw. Stirnnocken an die speziellen Erfordernisse des Einzelfalls anzupassen haben. Hier sind die bei Betrieb des Traktionsgetriebes 100 zu erwartenden Momenten- und Drehzahlen zu berücksichtigen. Insbesondere wird es eines der typischen Auslegungsziele sein, die auf die Lagerbolzen 110 wirkenden Radialkräfte gering zu halten. Dies erlaubt eine leichtere Ausführung der Nadellager 114 und erhöht den Wirkungsgrad des Getriebes 100. In erster Linie jedoch wird es das Auslegungsziel sein, den Kontaktdruck an den Kontaktpunkten K1a, K1b bzw. K2a, K2b exakt so einzustellen, dass das anliegende Moment ohne erheblichen Kontaktdrucküberschuss gerade übertragen werden kann.

### Bezugszeichenliste

- 10: Antriebsstrang
- 20: elektrische Maschine
- 21: Ausgangswelle von 20
- 30: Übersetzungs- und Ausgleichsgetriebe
- 32: Eingangsstufe von 30
- 321: Sonnenwelle von 32
- 322: Planetenträger von 32
- 323: Planet von 32
- 324: Hohlrad von 32
- 34: Laststufe
- 341: Sonnenwelle von 34
- 342: Planetenträger von 34
- 343: Planet von 34
- 344: Hohlrad von 34
- 36: Differentialstufe
- 361a,b: Sonnenwellen von 36
- 362: Planetenträger von 36
- 363: Doppelplantensatz von 36
- 38: Gehäuse
- 40a,b: Achsschenkel
- 100: Traktionsgetriebe/ Reibrollengetriebe
- 102: Sonnenwelle
- 104: Festsonne/ erste Sonne
- 106: Lossonne/ zweite Sonne
- 108: Planet
- 110: Lagerbolzen
- 112: Planetenträger
- 114: Nadellager
- 116: Planetenkörper
- 118: Planetenhals
- 120: Planetenkopf
- 122: Planetenträgerwelle
- 124: Festhohlrad/ erstes Hohlrad
- 126: Loshohlrad/ zweites Hohlrad
- 128: Gehäuse
- 130: Sprengring
- 132: Rampenträgerhülse
- 136: Abstandskörper
- 138: Rampenträger
- 140: Abstandskörper
- K1a,b: Kontaktpunkte Sonnen/Planet
- K2a,b: Kontaktpunkte Hohlräder/Planet
- P1, P2: Doppelpfeile
- r_{S}: Sonnenradius
- r_{HR}: Hohlradradius
- r_{P1}: erster Planetenradius
- r_{P2}: zweiter Planetenradius

## Patentansprüche

1. Reibrollenplanetengetriebe, umfassend
- ein Gehäuse (128),
- eine Sonnenwelle (102) mit einer ersten und einer zweiten darauf angeordneten Sonne (104, 106), die jeweils als Reibrollen ausgebildet und axial zueinander verschieblich sind und von denen wenigstens eine (104) drehfest mit der Sonnenwelle (102) verbunden ist,
- einen Planetenträger (112), an dem eine Mehrzahl als Reibrollen ausgebildeter, gestufter Planeten (108), welche je ein Paar Kontaktflächen kleineren Durchmessers und ein Paar Kontaktflächen größeren Durchmessers aufweisen, drehbar gelagert sind, und
- ein drehfest mit dem Gehäuse (128) verbundenes, als Reibring ausgebildetes, erstes Hohlrad (124),
wobei die Planeten (108) jeweils mit dem einen Paar ihrer Kontaktflächen an den Sonnen (104, 106) abwälzen und mit wenigstens einer Kontaktfläche des anderen Paares ihrer Kontaktflächen an dem ersten Hohlrad (124) abwälzen und
wobei der Kontaktdruck zwischen den Sonnen (104, 106) und den zugeordneten Kontaktflächen der Planeten (108) durch eine erste momentenabhängige Axialverschiebeeinrichtung mittels momentenabhängiger Axialverschiebung wenigstens einer der Sonnen (106) steuerbar ist,
**dadurch gekennzeichnet,**
**dass** ein als Reibring ausgebildetes, zweites Hohlrad (126) vorgesehen ist, das relativ zu dem ersten Hohlrad (124) axial verschieblich angeordnet ist, sodass die Planeten (108) mit ihrem zugeordneten Paar von Kontaktflächen an beiden Hohlrädern (124, 126) abwälzen,
wobei der Kontaktdruck zwischen den Hohlrädern (124, 126) und den zugeordneten Kontaktflächen der Planeten (108) durch eine zweite momentenabhängige Axialverschiebeeinrichtung mittels momentenabhängiger Axialverschiebung wenigstens eines der Hohlräder (126) steuerbar ist.

2. Reibrollenplanetengetriebe nach Anspruch 1,
**dadurch gekennzeichnet,**
**dass** die Planeten (108) symmetrisch ausgebildet sind und dass die den Hohlrädern (124, 126) zugeordneten Kontaktflächen der Planeten (108) einen kleineren Durchmesser als die den Sonnen (104, 106) zugeordneten Kontaktflächen der Planeten (108) aufweisen und dass die den Sonnen (104, 106) zugeordneten Kontaktflächen axial zwischen den den Hohlrädern (124, 126) zugeordneten Kontaktflächen angeordnet sind.

3. Reibrollenplanetengetriebe nach einem der vorangehenden Ansprüche,
**dadurch gekennzeichnet,**
**dass** das erste Hohlrad (124) fest und das zweite Hohlrad (126) drehfest mit dem Gehäuse (128) verbunden ist.

4. Reibrollenplanetengetriebe nach einem der vorangehenden Ansprüche,
**dadurch gekennzeichnet,**
**dass** die den Sonnen (104, 106) zugeordnete Axialverschiebeeinrichtung einen zur Sonnenwelle (102) drehfesten, auf der der ersten Sonne (104) abgewandten Seite der zweiten Sonne (106) axial an der Sonnenwelle (102) abgestützten Rampenträger (130, 132) und zwischen dem Rampenträger (130, 132) und der zweiten Sonne (106) einen Satz diese beiden kontaktierender Abstandskörper (136) aufweist, wobei die Abstandskörper (136) in Rampenführungen des Rampenträgers (130, 132) und/oder der zweiten Sonne (106) geführt sind.

5. Reibrollenplanetengetriebe nach Anspruch 4,
**dadurch gekennzeichnet,**
**dass** der Rampenträger einen mit der Sonnenwelle (102) axial fest verbundenen Stützring (130) und sonnenseitig von diesem eine gegen ihn abgestützte, drehfest mit der Sonnenwelle (102) verbundene Rampenträgerhülse (132) aufweist.

6. Reibrollenplanetengetriebe nach einem der vorangehenden Ansprüche,
**dadurch gekennzeichnet,**
**dass** die den Hohlrädern (124, 126) zugeordnete Axialverschiebeeinrichtung einen auf der dem ersten Hohlrad (124) abgewandten Seite des zweiten Hohlrades (126) fest mit dem Gehäuse verbundenen Rampenträger (138) und zwischen dem Rampenträger (138) und dem zweiten Hohlrad (126) einen Satz diese beiden kontaktierender Abstandskörper (140) aufweist, die in Rampenführungen des Rampenträgers (138) und/oder des zweiten Hohlrades (126) geführt sind.

7. Reibrollenplanetengetriebe nach einem der Ansprüche 4 bis 6,
**dadurch gekennzeichnet,**
**dass** die Rampenführungen wenigstens einer Axialverschiebeeinrichtung als wellenförmige Stirnnocken ausgebildet sind.

8. Reibrollenplanetengetriebe nach einem der Ansprüche 4 bis 7,
**dadurch gekennzeichnet,**
**dass** die Abstandskörper (136, 140) wenigstens einer Axialverschiebeeinrichtung als radial orientierte Zylinderkörper ausgebildet sind.

9. Reibrollenplanetengetriebe nach einem der Ansprüche 4 bis 8,
**dadurch gekennzeichnet,**
**dass** die Rampenführungen in Richtung auf die Abstandskörper (136, 140) axial federvorgespannt sind.

10. Reibrollenplanetengetriebe nach einem der vorangehenden Ansprüche,
**dadurch gekennzeichnet,**
**dass** die Sonnenwelle (102) axial verschieblich gelagert ist.

11. Reibrollenplanetengetriebe nach einem der vorangehenden Ansprüche,
**dadurch gekennzeichnet,**
**dass** Lagerbolzen (110), auf denen die Planeten (108) axial verschieblich am Planetenträger (112) gelagert sind, radial fest mit dem Planetenträger (112) verbunden sind.

12. Übersetzungs- und Ausgleichsgetriebe, umfassend eine Eingangsstufe (32), eine Laststufe (34) sowie eine Differentialstufe (36), die jeweils als Planetenstufen ausgebildet und koaxial zueinander angeordnet sind,
**dadurch gekennzeichnet,**
**dass** die Eingangsstufe (32) als ein Reibrollenplanetengetriebe (100) gemäß einem der vorangehenden Ansprüche ausgebildet ist.

13. Übersetzungs- und Ausgleichsgetriebe nach Anspruch 12,
**dadurch gekennzeichnet,**
**dass** als Ausgangswelle der Laststufe (34) und als Eingangswelle der Differentialstufe (36) jeweils deren Planetenträgerwellen dienen, wobei Planeten (343) der Laststufe (34) und Planeten (363) der Differentialstufe (36) gemeinsam auf durchgehenden, diesen beiden Getriebestufen (34, 36) gemeinsamen Lagerbolzen gelagert sind.

14. Übersetzungs- und Ausgleichsgetriebe für ein elektrisch angetriebenes Kraftfahrzeug mit einem Gehäuse (38), einer Getriebeeingangswelle und zwei koaxial zu der Getriebeeingangswelle angeordneten Getriebeausgangswellen, umfassend
- eine als Planetensatz ausgebildete Eingangsstufe (32), deren als Eingangsstufeneingangswelle wirkende Sonnenwelle (321) als die Getriebeeingangswelle koaxial mit einer Antriebsausgangswelle (21) einer elektrischen Maschine (20) verbindbar ist und deren Planetenträgerwelle als Eingangsstufenausgangswelle wirkt,
- eine als Planetensatz ausgebildete Laststufe (34) deren Sonnenwelle (341) als Laststufeneingangswelle koaxial mit der Eingangsstufenausgangswelle verbunden ist, deren Hohlrad (344) gehäusefest fixiert ist und deren Planetenträgerwelle als Laststufenausgangswelle wirkt,
- eine als Doppelplanetensatz ausgebildete Differentialstufe (36) mit einer Differentialeingangswelle und zwei Differentialausgangswellen, die als die Getriebeausgangswellen mit Antriebsrädern des Kraftfahrzeugs verbindbar sind,
**dadurch gekennzeichnet, dass**
- die Planeten (323) der als ein Reibrollenplanetengetriebe gemäß einem der Ansprüche 1 bis 12 ausgebildeten Eingangsstufe als Stufenplaneten ausgebildet sind, wobei eine Sonne an einer ersten Planetenstufe größeren Durchmessers und ein gehäusefest fixiertes Hohlrad (324) an einer zweiten Planetenstufe kleineren Durchmessers abwälzt, und
- die Planetenträgerwelle der Differentialstufe (36) als Differentialstufeneingangswelle und die Sonnenwellen (361a, 361b) der Differentialstufe (36) als Differentialstufenausgangswellen wirken.

## Claims

1. Friction roller planetary gearing, comprising
- a housing (128),
- a sun shaft (102) having a first and a second sun (104, 106) arranged thereon, which are each designed as friction rollers and are axially displaceable with respect to one another and of which at least one (104) is connected for conjoint rotation to the sun shaft (102),
- a planet carrier (112), on which a plurality of stepped planets (108), which are designed as friction rollers and each have a pair of contact surfaces of smaller diameter and a pair of contact surfaces of larger diameter, are rotatably supported, and
- a first annulus (124), which is connected to the housing (128) in a manner fixed against rotation relative thereto and is designed as a friction ring, wherein the planets (108) each roll on the suns (104, 106) by means of the one pair of contact surfaces of the planets and roll on the first annulus (124) by means of at least one contact surface of the other pair of contact surfaces of the planets, and
wherein the contact pressure between the suns (104, 106) and the associated contact surfaces of the planets (108) can be controlled by a first torque-dependent axial displacement device by means of torque-dependent axial displacement of at least one of the suns (106),
**characterized**
**in that** a second annulus (126) designed as a friction ring is provided, which is arranged so as to be axially displaceable relative to the first annulus (124), with the result that the planets (108) roll on both annuluses (124, 126) by means of the associated pair of contact surfaces of the planets,
wherein the contact pressure between the annuluses (124, 126) and the associated contact surfaces of the planets (108) is controllable by a second torque-dependent axial displacement device by means of torque-dependent axial displacement of at least one of the annuluses (126).

2. Friction roller planetary gearing according to Claim 1,
**characterized**
**in that** the planets (108) are symmetrically designed and in that the contact surfaces of the planets (108) which are associated with the annuluses (124, 126) have a smaller diameter than the contact surfaces of the planets (108) which are associated with the suns (104, 106), and in that the contact surfaces associated with the suns (104, 106) are arranged axially between the contact surfaces associated with the annuluses (124, 126) .

3. Friction roller planetary gearing according to one of the preceding claims,
**characterized**
**in that** the first annulus (124) is connected rigidly to the housing (128) and the second annulus (126) is connected to the housing (128) in a manner fixed against rotation relative thereto.

4. Friction roller planetary gearing according to one of the preceding claims,
**characterized**
**in that** the axial displacement device associated with the suns (104, 106) has a ramp carrier (130, 132), which is fixed for conjoint rotation to the sun shaft (102) and is supported axially on the sun shaft (102) on the side of the second sun (106) facing away from the first sun (104), and, between the ramp carrier (130, 132) and the second sun (106), has a set of spacers (136), which make contact with these two components, wherein the spacers (136) are guided in ramp guides of the ramp carrier (130, 132) and/or of the second sun (106).

5. Friction roller planetary gearing according to Claim 4,
**characterized**
**in that** the ramp carrier has a supporting ring (130) connected in an axially fixed manner to the sun shaft (102) and, on the sun side of said ring, has a ramp carrier sleeve (132) supported against the ring and connected for conjoint rotation to the sun shaft (102).

6. Friction roller planetary gearing according to one of the preceding claims,
**characterized**
**in that** the axial displacement device associated with the annuluses (124, 126) has a ramp carrier (138), which is connected rigidly to the housing on the side of the second annulus (126) which faces away from the first annulus (124), and, between the ramp carrier (138) and the second annulus (126), has a set of spacers (140), which make contact with these two components and are guided in ramp guides of the ramp carrier (138) and/or of the second annulus (126).

7. Friction roller planetary gearing according to one of Claims 4 to 6,
**characterized**
**in that** the ramp guides of at least one axial displacement device are designed as undulating face cams.

8. Friction roller planetary gearing according to one of Claims 4 to 7,
**characterized**
**in that** the spacers (136, 140) of at least one axial displacement device are designed as radially oriented cylindrical bodies.

9. Friction roller planetary gearing according to one of Claims 4 to 8,
**characterized**
**in that** the ramp guides are axially spring-loaded in the direction of the spacers (136, 140).

10. Friction roller planetary gearing according to one of the preceding claims,
**characterized**
**in that** the sun shaft (102) is supported so as to be axially displaceable.

11. Friction roller planetary gearing according to one of the preceding claims,
**characterized**
**in that** bearing journals (110), on which the planets (108) are supported on the planet carrier (112) so as to be axially displaceable, are connected in a radially fixed manner to the planet carrier (112).

12. Speed-changing and differential gearing, comprising an input stage (32), a load stage (34) and a differential stage (36), which are each designed as planetary stages and are arranged coaxially with respect to one another,
**characterized**
**in that** the input stage (32) is designed as a friction roller planetary gearing (100) according to one of the preceding claims.

13. Speed-changing and differential gearing according to Claim 12,
**characterized**
**in that** the planet carrier shafts of the load stage (34) and of the differential stage (36) serve as the output shaft and the input shaft thereof respectively, wherein planets (343) of the load stage (34) and planets (363) of the differential stage (36) are supported jointly on continuous bearing journals common to these two gearing stages (34, 36).

14. Speed-changing and differential gearing for an electrically driven motor vehicle having a housing (38), a gearing input shaft and two gearing output shafts, which are arranged coaxially with the gearing input shaft, comprising,
- an input stage (32), which is designed as a planetary set and the sun shaft (321) of which, which acts as an input stage input shaft, can be connected as the gearing input shaft coaxially with a drive output shaft (21) of an electric motor (20) and the planet carrier shaft of which acts as an input stage output shaft,
- a load stage (34), which is designed as a planetary set and the sun shaft (341) of which is connected as a load stage input shaft coaxially with the input stage output shaft, the annulus (344) of which is fixed in relation to the housing and the planet carrier shaft of which acts as a load stage output shaft,
- a differential stage (36), which is designed as a double planetary set and has a differential input shaft and two differential output shafts, which can be connected as the gearing output shafts to driven wheels of the motor vehicle,
**characterized in that**
- the planets (323) of the input stage designed as a friction roller planetary gearing according to one of Claims 1 to 12 are designed as stepped planets, wherein a sun rolls on a first planet stage of larger diameter and an annulus (324) fixed in relation to the housing rolls on a second planet stage of smaller diameter, and
- the planet carrier shaft of the differential stage (36) acts as a differential stage input shaft and the sun shafts (361a, 361b) of the differential stage (36) act as differential stage output shafts.

## Revendications

1. Transmission à engrenages planétaires à galets de friction, comprenant
- un boîtier (128),
- un arbre de roue solaire (102) avec une première et une deuxième roue solaire (104, 106) disposées sur celui-ci, qui sont à chaque fois réalisées sous forme de galets de friction et qui sont déplaçables axialement l'une par rapport à l'autre et dont au moins l'une (104) est connectée de manière solidaire en rotation à l'arbre de roue solaire (102),
- un porte-satellites (112), sur lequel sont supportés de manière rotative une pluralité de satellites étagés (108) réalisés sous forme de galets de friction qui présentent chacun une paire de surfaces de contact de plus petit diamètre et une paire de surfaces de contact plus grand diamètre, et
- une première couronne dentée (124) réalisée sous forme de bague de friction, connectée de manière solidaire en rotation au boîtier (128),
les satellites (108) roulant à chaque fois avec l'une des paires de leurs surfaces de contact sur les roues solaires (104, 106) et avec au moins une surface de contact de l'autre paire de leurs surfaces de contact sur la première couronne dentée (124) et
la pression de contact entre les roues solaires (104, 106) et les surfaces de contact associées des satellites (108) pouvant être commandée par un premier dispositif de déplacement axial dépendant du couple au moyen d'un déplacement axial dépendant du couple d'au moins l'une des roues solaires (106),
**caractérisée en ce**
**qu'**il est prévu une deuxième couronne dentée (126) réalisée sous forme de bague de friction, qui est disposée de manière déplaçable axialement par rapport à la première couronne dentée (124), de telle sorte que les satellites (108) roulent avec leur paire associée de surfaces de contact sur les deux couronnes dentées (124, 126),
la pression de contact entre les couronnes dentées (124, 126) et les surfaces de contact associées des satellites (108) pouvant être commandée par un deuxième dispositif de déplacement axial dépendant du couple au moyen d'un déplacement axial dépendant du couple d'au moins l'une des couronnes dentées (126) .

2. Transmission à engrenages planétaires à galets de friction selon la revendication 1,
**caractérisée en ce que**
les satellites (108) sont réalisés de manière symétrique et **en ce que** les surfaces de contact des satellites (108) associées aux couronnes dentées (124, 126) présentent un plus petit diamètre que les surfaces de contact des satellites (108) associées aux roues solaires (104, 106) et **en ce que** les surfaces de contact associées aux roues solaires (104, 106) sont disposées axialement entre les surfaces de contact associées aux couronnes dentées (124, 126).

3. Transmission à engrenages planétaires à galets de friction selon l'une quelconque des revendications précédentes,
**caractérisée en ce que**
la première couronne dentée (124) est connectée fixement au boîtier (128) et la deuxième couronne dentée (126) est connectée de manière solidaire en rotation au boîtier (128).

4. Transmission à engrenages planétaires à galets de friction selon l'une quelconque des revendications précédentes,
**caractérisée en ce que**
le dispositif de déplacement axial associé aux roues solaires (104, 106) présente un support en rampe (130, 132) solidaire en rotation par rapport à l'arbre de roue solaire (102), supporté axialement sur l'arbre de roue solaire (102) du côté de la deuxième roue solaire (106) opposé à la première roue solaire (104), et présente, entre le support en rampe (130, 132) et la deuxième roue solaire (106), un jeu de corps d'espacement (136) venant en contact avec ceux-ci, les corps d'espacement (136) étant guidés dans des guides de rampe du support en rampe (130, 132) et/ou de la deuxième roue solaire (106).

5. Transmission à engrenages planétaires à galets de friction selon la revendication 4,
**caractérisée en ce que**
le support en rampe présente une bague de support (130) connectée fixement axialement à l'arbre de roue solaire (102) et, du côté roue solaire de celle-ci, un manchon de support en rampe (132) supporté contre celle-ci, connecté de manière solidaire en rotation à l'arbre de roue solaire (102) .

6. Transmission à engrenages planétaires à galets de friction selon l'une quelconque des revendications précédentes,
**caractérisée en ce que**
le dispositif de déplacement axial associé aux couronnes dentées (124, 126) présente un support en rampe (138) connecté fixement au boîtier du côté de la deuxième couronne dentée (126) opposé à la première couronne dentée (124), et entre le support en rampe (138) et la deuxième couronne dentée (126), un jeu de corps d'espacement (140) venant en contact avec ceux-ci, qui sont guidés dans des guides de rampe du support en rampe (138) et/ou de la deuxième couronne dentée (126).

7. Transmission à engrenages planétaires à galets de friction selon l'une quelconque des revendications 4 à 6,
**caractérisée en ce que**
les guides de rampe d'au moins un dispositif de déplacement axial sont réalisés sous forme de cames frontales de forme ondulée.

8. Transmission à engrenages planétaires à galets de friction selon l'une quelconque des revendications 4 à 7,
**caractérisée en ce que**
les corps d'espacement (136, 140) d'au moins un dispositif de déplacement axial sont réalisés sous forme de corps cylindriques orientés radialement.

9. Transmission à engrenages planétaires à galets de friction selon l'une quelconque des revendications 4 à 8,
**caractérisée en ce que**
les guides de rampe sont précontraints axialement par ressort dans la direction des corps d'espacement (136, 140).

10. Transmission à engrenages planétaires à galets de friction selon l'une quelconque des revendications précédentes,
**caractérisée en ce que**
l'arbre de roue solaire (102) est supporté de manière déplaçable axialement.

11. Transmission à engrenages planétaires à galets de friction selon l'une quelconque des revendications précédentes,
**caractérisée en ce que**
des boulons de paliers (110) sur lesquels les satellites (108) sont supportés de manière déplaçable axialement sur le porte-satellites (112), sont connectés fixement radialement au porte-satellites (112).

12. Transmission à engrenage démultiplicateur et différentiel, comprenant un étage d'entrée (32), un étage de charge (34) ainsi qu'un étage différentiel (36) qui sont à chaque fois réalisés sous forme d'étages planétaires et qui sont disposés coaxialement les uns par rapport aux autres,
**caractérisée en ce que**
l'étage d'entrée (32) est réalisé sous forme de transmission à engrenages planétaires (100) selon l'une quelconque des revendications précédentes.

13. Transmission à engrenage démultiplicateur et différentiel selon la revendication 12,
**caractérisée**
**en ce que** l'étage de charge (34) sert d'arbre de sortie et l'étage différentiel (36) sert d'arbre d'entrée à chaque fois pour leurs arbres de porte-satellites, les satellites (343) de l'étage de charge (34) et les satellites (363) de l'étage différentiel (36) étant supportés ensemble sur des boulons de palier continus, communs à ces deux étages de transmission (34, 36).

14. Transmission à engrenage démultiplicateur et différentiel pour un véhicule automobile à entraînement électrique, comprenant un boîtier (38), un arbre d'entrée de transmission et deux arbres de sortie de transmission disposés coaxialement par rapport à l'arbre d'entrée de transmission, comprenant
- un étage d'entrée (32) réalisé sous forme de jeu de satellites, dont l'arbre de roue solaire (321) agissant en tant qu'arbre d'entrée de l'étage d'entrée peut être connecté en tant qu'arbre d'entrée de transmission coaxialement à un arbre de sortie d'entraînement (21) d'une machine électrique (20) et dont l'arbre de porte-satellites agit en tant qu'arbre de sortie de l'étage d'entrée,
- un étage de charge (34) réalisé sous forme de jeu de satellites, dont l'arbre de roue solaire (341) est connecté en tant qu'arbre d'entrée de l'étage de charge coaxialement à l'arbre de sortie de l'étage d'entrée, dont la couronne dentée (344) est fixée de manière solidaire au boîtier et dont l'arbre de porte-satellites agit en tant qu'arbre de sortie de l'étage de charge,
- un étage différentiel (36) réalisé sous forme de double jeu de satellites, avec un arbre d'entrée de différentiel et deux arbres de sortie de différentiels qui peuvent être connectés en tant qu'arbres de sortie de transmission à des roues d'entraînement du véhicule automobile,
**caractérisée en ce que**
- les satellites (323) de l'étage d'entrée réalisé sous forme de transmission à engrenages planétaires à galets de friction selon l'une quelconque des revendications 1 à 12 sont réalisés sous forme de satellites étagés, une roue solaire roulant sur un premier étage de satellites de plus grand diamètre et une couronne dentée (324) fixée de manière solidaire au boîtier roulant sur un deuxième étage de satellites de plus petit diamètre, et
- l'arbre de porte-satellites de l'étage différentiel (36) agit en tant qu'arbre d'entrée de l'étage différentiel et les arbres de roue solaire (361a, 361b) de l'étage différentiel (36) agissent en tant qu'arbres de sortie de l'étage différentiel.
